# DEMANDE DE BREVET EUROPEEN

(11) **EP 3 628 197 A1**
(43) Date de publication de la demande: **01.04.2020**
(21) Numéro de dépôt: 19199137.1
(22) Date de dépôt: 24.09.2019
(51) Int. Cl.: A47J 37/06

(54) **APPAREIL DE CUISSON EQUIPÉ D'UN CAQUELON AVEC GRILLE REVERSIBLE**

(30) Priorité: 28.09.2018 FR 1859037
(71) Demandeur: SEB S.A., 69130 Ecully (FR)
(72) Inventeur: CHAPPEL, Valérie, 74150 VALLIERES (FR)
(74) Mandataire: Soares, Luis Filipe

(57) **Abrégé**

L'invention concerne un appareil de cuisson (1) comprenant un caquelon (5) et un système de chauffe du caquelon, ledit caquelon définissant un contenant (6) présentant un fond (8). L'appareil (1) comprend une grille (11) amovible munie d'une surface ajourée (15) apte à recevoir des aliments, ladite grille étant adaptée pour venir se loger dans le fond du contenant, ledit appareil comprend des moyens de support agencés pour placer la surface ajourée soit dans une première position, à même le fond du contenant, soit dans une seconde position, décalée en hauteur par rapport audit fond. Selon une réalisation, l'appareil (1) est du type à raclette. L'invention porte également sur l'utilisation de cet appareil (1) et de la grille (11) selon les deux positions pour chauffer un aliment et pour maintenir au chaud un aliment.

## Description

### Domaine technique

La présente invention concerne un appareil de cuisson qui comporte un caquelon et un système de chauffe du caquelon. Un tel caquelon a notamment pour fonction de faire des fondues fromagères.

L'invention vise à étendre les fonctions d'un tel appareil de cuisson.

### Etat de la technique

Les appareils de cuisson qui comportent un caquelon et un système de chauffe du caquelon sont connus de l'homme du métier. Traditionnellement, le caquelon d'un tel appareil a pour fonction de recevoir du fromage afin de réaliser une fondue fromagère, voire de recevoir un court-bouillon pour cuire par pochage de la viande, du poisson, des crustacés et/ou des légumes.

Certains appareils de cuisson sont multifonctions. Il est en effet connu des appareils à raclette qui, outre la présence de coupelles permettant notamment la réception d'une portion de fromage à fondre et la présence d'une plaque de cuisson permettant de griller des légumes, des viandes, des poissons et des crustacés et/ou de faire des crêpes, comportent un caquelon pouvant être positionné en lieu et place de la plaque de cuisson afin de réaliser des fondues.

### Résumé de l'invention

La présente invention met en oeuvre un appareil de cuisson qui comprend un caquelon et un système de chauffe du caquelon, ledit caquelon définissant un contenant qui présente un fond. L'objectif principal est d'étendre les fonctions d'utilisation de ce caquelon.

A cet effet, outre les caractéristiques précitées, l'appareil de cuisson selon l'invention comprend une grille amovible munie d'une surface ajourée apte à recevoir des aliments, ladite grille étant adaptée pour venir se loger dans le fond du contenant. En outre, l'appareil de cuisson comprend des moyens de support agencés pour placer ladite surface ajourée soit dans une première position, à même le fond du contenant, soit dans une seconde position, décalée en hauteur par rapport audit fond.

En d'autres termes, l'appareil de cuisson selon l'invention met en oeuvre une grille et des moyens de support permettant de positionner la surface ajourée de cette grille de deux façons différentes, l'une au contact du fond du contenant de ce caquelon (première position) et l'autre à distance dudit fond (seconde position).

Cette première position de la surface ajourée de la grille permet de chauffer des aliments dans le caquelon sans qu'ils soient directement en contact avec le fond du contenant, lesdits aliments pouvant être positionnés directement sur la surface ajourée ou placés dans un récipient qui est posé sur cette surface ajourée. A titre d'exemple, l'aliment peut être un fromage à faire fondre (Mont d'Or, Camembert ...) qui est disposé dans une boîte en bois, le maintien de la boîte en bois sans contact direct avec le fond du contenant évitant à celle-ci de brûler.

La seconde position de la surface ajourée de la grille permet de maintenir au chaud des aliments dans le caquelon en plaçant de l'eau dans le fond du contenant, lesdits aliments pouvant être positionnés directement sur la surface ajourée ou placés dans un récipient qui est posé sur cette surface ajourée. A titre d'exemple, les aliments peuvent être des pommes de terre cuites et servies avec leur peau, cuisson dite « en robe des champs », lesdites pommes de terre étant placées directement sur la surface ajourée de la grille dans le caquelon, l'eau qui chauffe dans le fond du contenant maintenant au chaud lesdites pommes de terre sans qu'elles baignent dans cette eau.

Selon une réalisation de l'appareil de cuisson, la surface ajourée de la grille est décalée en hauteur du fond d'une distance comprise entre 15 mm et 25 mm, de préférence de 20 mm, dans sa seconde position. Cela permet de mettre une quantité suffisante d'eau dans le fond du contenant pour toute la durée d'un repas, sans nécessité d'en ajouter pendant ledit repas.

Selon une réalisation de l'appareil de cuisson, les moyens de support comprennent au moins un élément protubérant s'étendant sensiblement transversalement par rapport à un plan général de la surface ajourée depuis une première des deux faces de la surface ajourée de la grille. Dans la seconde position de la surface ajourée de la grille, ledit au moins un élément protubérant prend appui sur le fond du contenant en maintenant stable et à distance ladite surface ajourée vis-à-vis dudit fond. L'inversion du sens de la surface ajourée permet au contraire à la seconde desdites deux faces de la surface ajourée de reposer directement sur le fond du contenant, dans la première position de la surface ajourée de la grille.

Selon une réalisation de l'appareil de cuisson, les moyens de support comprennent au moins trois éléments protubérants sous la forme de pattes agencées à la périphérie de la surface ajourée de la grille, de préférence trois éléments protubérants. Ces pattes pourront assurer des contacts ponctuels ou linéaires sur le fond du contenant, dans la seconde position de la surface ajourée de la grille. Dans une variante où ces pattes assurent un contact linéaire avec le fond du contenant, le nombre d'éléments protubérants pourrait être limité à deux. Des variantes de réalisations des moyens de support sont envisageables dans le cadre de l'invention, comme cela apparaîtra dans la suite de la description.

Selon une réalisation de l'appareil de cuisson, la surface ajourée comprend un bord périphérique filaire sur lequel est formé par emboutissage ou par soudage l'au moins un élément protubérant.

Selon une réalisation, cette surface ajourée comprend des tiges parallèles et espacées entre elles, lesdites tiges étant soudées à leurs extrémités sur le bord périphérique filaire précité.

Selon une réalisation, les tiges précitées sont soudées sur le bord périphérique filaire, du côté de l'au moins un élément protubérant. Ainsi, les aliments qui reposent directement ou indirectement sur ces tiges, sont espacés légèrement du fond du contenant d'une distance correspondant à l'épaisseur du bord périphérique filaire et à l'épaisseur desdites tiges. En variante, il serait possible de souder lesdites tiges sur le bord périphérique filaire, du côté opposé à l'au moins un élément protubérant, dans ce cas ladite distance correspondrait uniquement à l'épaisseur des tiges ; les aliments seraient alors plus proches du fond du contenant.

Des variantes de grilles peuvent être envisagées dans le cadre de l'invention. Ainsi, selon une variante de réalisation, la grille comprend une surface ajourée qui est constituée d'une plaque perforée.

Selon une réalisation, l'appareil de cuisson est du type appareil à raclette. On pourrait toutefois envisager la mise en oeuvre de l'invention sur un appareil à fondues ou sur une crêpière.

Selon une réalisation, l'appareil de cuisson comporte un couvercle permettant la fermeture du contenant intégrant la surface ajourée de la grille dans sa première position ou dans sa seconde position. Bien entendu, le couvercle peut être mis en place sur le contenant, sans l'utilisation de la grille.

Selon une réalisation, l'appareil de cuisson comprend une embase, une résistance de chauffe et une structure de support agencée sur l'embase pour recevoir le caquelon avec la résistance de chauffe placée sous le fond. L'embase comprend sur une face supérieure des cavités permettant chacune la réception d'une coupelle de forme adaptée auxdites cavités. En outre, la structure de support permet de déporter vers le haut le caquelon en maintenant un espace entre ladite face supérieure et ledit caquelon pour l'introduction des coupelles, la résistance étant déportée au-dessus dudit espace, le caquelon étant configuré pour recouvrir ladite résistance.

Selon une réalisation, l'appareil de cuisson comprend une plaque de cuisson pouvant être positionnée en lieu et place du caquelon. Cette plaque de cuisson permettra par exemple de cuire des viandes, des poissons, des crustacés, des légumes et/ou de faire des crêpes.

L'invention porte également sur l'utilisation d'un appareil de cuisson présentant l'une quelconque des caractéristiques précitées.

Selon une première utilisation, l'appareil de cuisson objet de l'invention permet de chauffer un aliment qui est placé sur la surface ajourée de la grille, ladite surface ajourée étant disposée dans sa première position, à même le fond du contenant. Selon cette première utilisation, l'aliment peut être placé dans un récipient posé lui-même sur la surface ajourée de la grille, ledit aliment étant du type fondant à la chaleur. Un tel aliment est par exemple un fromage du type Mont d'Or ou du type Camembert.

Selon une seconde utilisation, l'appareil de cuisson objet de l'invention permet de maintenir au chaud un aliment qui est placé sur la surface ajourée de la grille, ladite surface ajourée étant disposée dans sa seconde position, décalée en hauteur du fond du contenant. En outre, de l'eau est préalablement versée dans le fond du contenant jusqu'à un niveau situé en-dessous de la surface ajourée. Selon cette utilisation, l'aliment peut être posé directement sur la surface ajourée de la grille. Un tel aliment consiste par exemple en des pommes de terre cuites et servies avec leur peau.

### Brève description des figures

La description suivante met en évidence les caractéristiques et avantages de la présente invention. Cette description s'appuie sur des figures, parmi lesquelles :
- Les figures 1 et 2 illustrent deux vues d'un appareil de cuisson selon l'invention, du type raclette, avec la grille placée dans le caquelon selon deux positions inversées ;
- La figure 3 illustre ledit appareil des figures 1 et 2, avec un couvercle fermant le caquelon ;
- Les figures 4 et 5 illustrent deux vues de la grille selon lesdites deux positions inversées.

### Description détaillée

Dans la suite de la description, le terme appareil est utilisé pour désigner l'appareil de cuisson selon l'invention, sans indication contraire.

Dans la suite de la description, les termes « horizontal », « vertical », « inférieur », « supérieur », « longitudinal », « transversal », « haut », « bas », qui pourraient être employés, le seront en considération de la position de l'appareil reposant sur un plan de table, en situation d'usage.

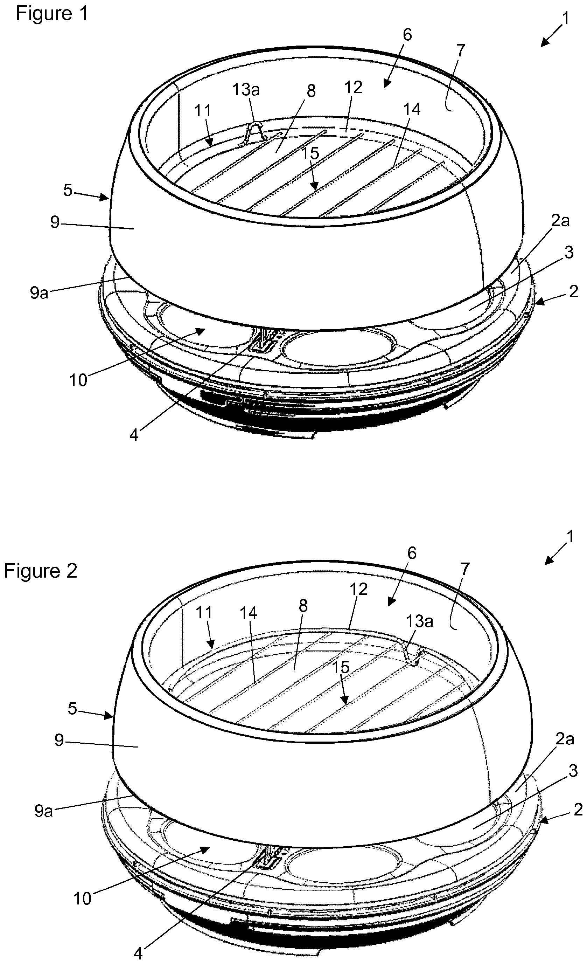

En regard des figures 1 à 3, l'appareil 1 est du type appareil à raclette. L'appareil 1 comprend une embase 2 qui comporte sur sa face supérieure 2a plusieurs cavités 3, par exemple six ou huit, qui permettent chacune la réception d'une coupelle (non illustrée) dans laquelle peut être placé un morceau de fromage à faire fondre, voire d'autres aliments à cuire (lardons, morceaux d'oignons ou de champignons ...). Une structure de support 4 est agencée au-dessus de la face supérieure 2a de cette embase 2 ; cette structure de support 4 reçoit de manière amovible un caquelon 5. Le caquelon 5 définit un contenant 6 qui présente un contour interne 7 et un fond 8. Le caquelon 5 présente également un contour externe 9 dont le bord inférieur 9a est tombant et descend au-delà de la position du fond 8. La structure de support 4 permet de déporter vers le haut le caquelon 5 par rapport à l'embase 2, en maintenant un espace 10 entre ladite face supérieure 2a de l'embase 2 et le bord inférieur 9a du contour externe 9 dudit caquelon 5, afin de pouvoir engager les coupelles (non illustrées) dans cet espace 10 et les placer dans les cavités 3.

L'appareil 1 comprend un système de chauffe (non illustré) comportant une résistance de chauffe (non illustrée), laquelle est placée au-dessus de l'espace 10 et recouverte par le caquelon 5, et disposée sous le fond 8 du contenant 6. Cette résistance de chauffe est dissimulée par le contour externe 9 du caquelon 5, ce qui permet de contenir la chaleur sous le caquelon 5 et de diffuser cette chaleur par le fond 8 du contenant 6, d'une part, et vers les coupelles (non illustrées) placées dans les cavités 3 sur la face supérieure 2a de l'embase 2, d'autre part. Cela sécurise également l'appareil 1 en évitant de toucher la résistance de chauffe avec la main lors de la mise en place d'une coupelle dans une cavité 3 sur la face supérieure 2a de l'embase 2.

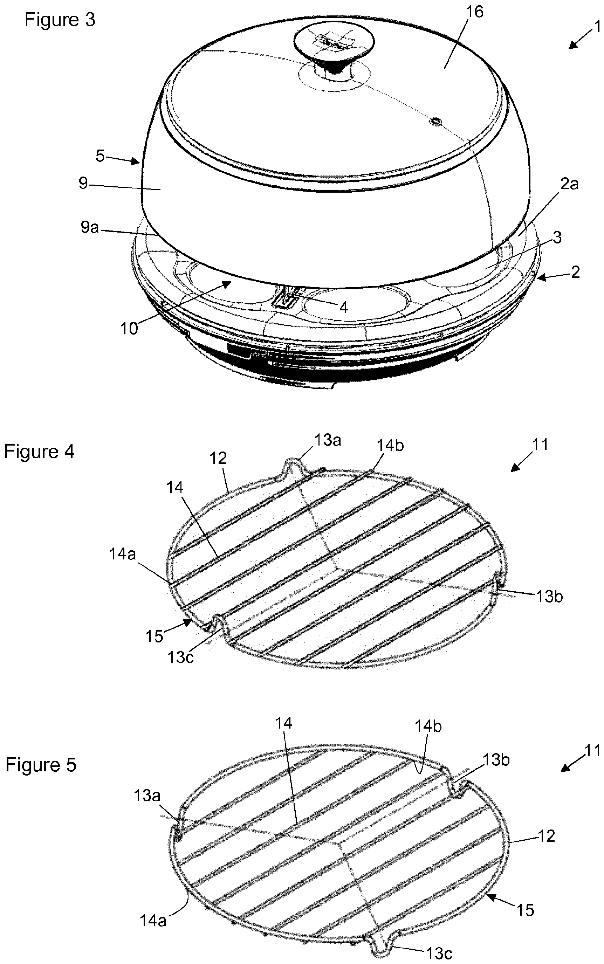

Tel qu'illustré en regard des figures 1, 2, 4 et 5, l'appareil 1 comprend une grille 11 qui est conçue pour venir se loger dans le contenant 6 du caquelon 5 selon deux positions précisées ci-après. La grille 11 comprend un bord périphérique filaire 12 et trois pattes 13a, 13b, 13c mises en oeuvre par emboutissage du bord périphérique filaire 12. Ces trois pattes 13a, 13b, 13c sont uniformément réparties autour du bord périphérique filaire 12 et s'étendent transversalement par rapport à celui-ci. La grille 11 comprend également des tiges 14 disposées parallèlement entre elles et uniformément réparties. Chaque tige 14 a ses deux extrémités 14a, 14b qui sont soudées sur le bord périphérique filaire 12, du côté des trois pattes 13a, 13b, 13c, comme le montrent notamment les figures 4 et 5. Le bord périphérique filaire 12 avec les tiges 14 fixées sur celui-ci définissent une surface ajourée 15 plane sur la grille 11. Les trois pattes 13a, 13b, 13c forment ainsi des moyens de support comprenant au moins un élément protubérant s'étendant sensiblement transversalement par rapport à un plan général de la surface ajourée 15.

Dans une première position illustrée en figure 1, cette surface ajourée 15 de la grille 11 repose à même le fond 8 du contenant 6, les pattes 13a, 13b, 13c s'étendant vers le haut dans le contenant 6. Selon la mise en oeuvre de la grille 11 décrite précédemment, le bord périphérique filaire 12 repose sur le fond 8 et les tiges 14 restent donc très légèrement espacées du fond 8. Selon une variante de conception de la grille 11, les extrémités 14a, 14b de chaque tige 14 pourraient être soudées sur le bord périphérique filaire 12, mais du côté opposé aux pattes 13a, 13b, 13c ; dans ce cas, les tiges 14 de la surface ajourée 15 viendraient directement en contact sur le fond 8 du contenant 6, dans cette première position de la surface ajourée de la grille 11 placée dans ledit contenant 6. Selon cette première position, le ou les aliments placés sur la surface ajourée 15 peuvent cuire sans être en contact direct avec le fond 8 du contenant 6, ce qui évite de le ou les brûler ; lorsque l'aliment est un fromage fondant placé dans une boîte en bois, par exemple un Mont d'or ou un Camembert, cela évite de brûler ladite boîte.

Dans une seconde position illustrée en figure 2, la surface ajourée 15 de la grille 11 est disposée à distance du fond 8 du contenant 6, les pattes 13a, 13b, 13c s'étendant vers le bas et venant en contact avec ledit fond 8. Ainsi, un espace correspondant à la longueur desdites pattes 13a, 13b, 13c demeure entre le fond 8 et la surface ajourée 15. De préférence, les pattes 13a, 13b, 13c sont dimensionnées pour que la surface ajourée 15 soit décalée en hauteur du fond 8 d'une distance comprise entre 15 mm et 25 mm, de préférence de 20 mm. Cela permet de verser une quantité d'eau dans le fond 8 du contenant 6 sans atteindre le niveau de la surface ajourée 15, cette quantité d'eau chauffant et permettant de maintenir au chaud des aliments placés sur la surface ajourée 15, par exemple des pommes de terre cuites et servies avec leur peau, durant tout le repas. Pour préserver la chaleur produite par l'eau qui chauffe dans le contenant 6, le caquelon 5 comprend un couvercle 16 permettant de fermer ledit contenant 6, comme l'illustre la figure 3. Ce couvercle 16 sert également lorsque la grille 11 est dans sa première position, pour favoriser une montée en température dans le contenant 6 et, ainsi, la fonte du fromage placé sur ladite grille 11. Le couvercle 16 sert aussi sans l'utilisation de la grille 11, notamment pour favoriser la fonte du fromage ou la montée en température du court-bouillon disposé directement dans le contenant 6 du caquelon 5, dans le cadre d'une fondue.

La description qui précède n'est pas limitative, des variantes de réalisation pouvant être envisagées sans sortir du cadre de l'invention.

A titre d'exemple, les pattes 13a, 13b, 13c ont une forme plus ou moins circulaires sur les figures 4 et 5, assurant ainsi des appuis ponctuels sur le fond 8 du contenant 6. On pourrait prévoir plus de trois pattes, par exemple quatre. On pourrait aussi prévoir des pattes ayant une forme en créneau, ce qui permettrait de constituer des appuis linéaires sur le fond 8 du contenant 6 et éventuellement de limiter le nombre de pattes à deux pattes disposées en regard.

Sur ces figures 4 et 5, les pattes 13a, 13b, 13c sont mises en oeuvre par emboutissage du bord périphérique filaire 12. On pourrait prévoir de souder ces pattes 13a, 13b, 13c sur ledit bord périphérique filaire 12.

La surface ajourée 15 pourrait être mise en oeuvre par une plaque perforée (non illustrée), les pattes 13a, 13b, 13c étant alors soudées sur une des deux faces de ladite plaque perforée, de préférence au niveau de son bord périphérique. En remplacement des pattes 13a, 13b, 13c, on pourrait prévoir un rebord périphérique s'étendant transversalement par rapport au plan général de la plaque depuis le contour de la plaque perforée, ce rebord venant en appui sur le fond 8 du contenant dans la seconde position de la surface ajourée de la grille 11.

Sur le mode de réalisation décrit précédemment en regard des figures 1 à 5, le passage de la première position à la seconde position, ou inversement, est obtenu en retournant la grille 11 et en la posant dans le fond 8 du contenant 6. D'autres conceptions de la grille 11 pourraient permettre également de placer ladite surface ajourée de la grille 11 dans la première position ou dans la seconde position, sans nécessiter de la retourner. Par exemple, on pourrait supprimer les pattes 13a, 13b, 13c et prévoir des bossages (non illustrés) agencés radialement sur le contour interne 7 du contenant 6 et des renfoncements (non illustrés) agencés radialement sur le bord périphérique filaire 12, lesdits renfoncements étant de forme complémentaire aux bossages de sorte que, lorsque les renfoncements correspondent avec les bossages, la surface ajourée 15 peut descendre dans le fond 8 du contenant 6 (première position) et, lorsque les renfoncements sont en décalage angulaire par rapport aux bossages, le bord périphérique filaire 12 repose sur lesdits bossages et la surface ajourée 15 est maintenue à distance du fond 8 du contenant 6 (seconde position).

Selon une variante, l'appareil 1 pourrait également comprendre une plaque de cuisson (non illustrée) qui pourrait être placée sur la structure de support 4 en lieu et place du caquelon 5. Cette plaque de cuisson peut comporter une zone circulaire pour la réalisation de crêpes et/ou des nervures pour constituer une surface à grillade. Une telle plaque de cuisson existe déjà sur les appareils à raclette traditionnels.

## Revendications

1. Appareil de cuisson (1) comprenant un caquelon (5) et un système de chauffe du caquelon, ledit caquelon définissant un contenant (6) présentant un fond (8), **caractérisé en ce que** l'appareil (1) comprend une grille (11) amovible munie d'une surface ajourée (15) apte à recevoir des aliments, ladite grille étant adaptée pour venir se loger dans le fond du contenant, ledit appareil comprend des moyens de support agencés pour placer la surface ajourée soit dans une première position, à même le fond du contenant, soit dans une seconde position, décalée en hauteur par rapport audit fond.

2. Appareil de cuisson (1) selon la revendication 1, dans lequel la surface ajourée (15) de la grille (11) est décalée en hauteur du fond (8) d'une distance comprise entre 15 mm et 25 mm, de préférence de 20 mm, dans sa seconde position.

3. Appareil de cuisson (1) selon l'une quelconque des revendications 1 ou 2, dans lequel les moyens de support comprennent au moins un élément protubérant s'étendant sensiblement transversalement par rapport à un plan général de la surface ajourée (15) depuis une première des deux faces de la surface ajourée (15) de la grille (11), dans la seconde position de la surface ajourée ledit au moins un élément protubérant prenant appui sur le fond (8) en maintenant stable et à distance ladite surface ajourée vis-à-vis dudit fond, l'inversion du sens de la surface ajourée permettant à la seconde desdites deux faces de reposer directement sur le fond dans la première position.

4. Appareil de cuisson (1) selon la revendication 3, dans lequel les moyens de support comprennent au moins trois éléments protubérants sous la forme de pattes (13a, 13b, 13c) agencées à la périphérie de la surface ajourée (15) de la grille (11).

5. Appareil de cuisson (1) selon l'une quelconque des revendications 3 ou 4, dans lequel la surface ajourée (15) comprend un bord périphérique filaire (12) sur lequel est formé par emboutissage ou soudage l'au moins un élément protubérant.

6. Appareil de cuisson (1) selon la revendication 5, dans lequel la surface ajourée (15) comprend des tiges (14) parallèles et espacées entre elles, lesdites tiges étant soudées à leurs extrémités (14a, 14b) sur le bord périphérique filaire (12).

7. Appareil de cuisson (1) selon la revendication 6, dans lequel les tiges (14) sont soudées sur le bord périphérique filaire (12), du côté de l'au moins un élément protubérant.

8. Appareil de cuisson (1) selon l'une quelconque des revendications 1 à 4, dans lequel la surface ajourée (15) est constituée d'une plaque perforée.

9. Appareil de cuisson (1) selon l'une quelconque des revendications 1 à 8, lequel est de type appareil à raclette.

10. Utilisation d'un appareil de cuisson (1) selon l'une quelconque des revendications 1 à 9 pour chauffer un aliment, ledit aliment étant placé sur la surface ajourée (15) de la grille (11), ladite surface ajourée étant disposée dans sa première position, à même le fond (8) du contenant (6).

11. Utilisation selon la revendication 10, l'aliment étant dans un récipient posé lui-même sur la surface ajourée (15) de la grille (11), ledit aliment étant du type fondant à la chaleur.

12. Utilisation d'un appareil de cuisson (1) selon l'une quelconque des revendications 1 à 9 pour maintenir au chaud un aliment, ledit aliment étant placé sur la surface ajourée (15) de la grille (11), ladite surface ajourée étant disposée dans sa seconde position, décalée en hauteur du fond (8) du contenant (6), de l'eau étant préalablement versée dans le fond du contenant jusqu'à un niveau situé en-dessous de la surface ajourée.

13. Utilisation selon la revendication 12, l'aliment étant posé directement sur la surface ajourée (15) de la grille (11).
